# EUROPEAN PATENT SPECIFICATION

(11) **EP 2 765 036 B1**
(45) Date of publication and mention of the grant of the patent: **04.11.2015**
(21) Application number: 13154175.7
(22) Date of filing: 06.02.2013
(51) Int. Cl.: B60R 21/235, B60R 21/36, B60R 21/233

(54) **A pedestrian airbag arrangement**
Fußgänger-Airbaganordnung
Agencement d'airbag pour piétons

(43) Date of publication of application: 13.08.2014
(73) Proprietor: Autoliv Development AB, 447 83 Vårgårda (SE)
(72) Inventor: Lindberg, Ken, SE-441 46 Alingsås (SE); Östling, Martin, SE-507 33 Brämhult (SE); Johansson, Jack, SE-43832 Landvetter (SE)
(74) Representative: Parry, Simon James

(56) References cited:
- EP-A1- 2 428 412
- EP-A1- 2 599 670
- US-A1- 2008 185 823

## Description

The present invention relates to a pedestrian airbag arrangement, and more particularly relates to a pedestrian airbag arrangement on a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted by a suitable air-bag, piston or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

It has therefore been proposed previously to provide a pedestrian airbag comprising a relatively large primary chamber and a plurality of relatively small secondary chambers, the airbag being configured such that the secondary chambers inflate into respective positions in spaced relation to one another and each between the primary chamber and the vehicle's windscreen in order to space the primary chamber from the windscreen. Such an arrangement has been found to provide good protection to a pedestrian, in the form of a relatively "thick" airbag, without necessitating an excessive volume of gas to inflate the airbag.

EP 2 428 412 shows a pedestrian airbag arrangement according to the preamble of claim 1.

Nevertheless, previously proposed airbags of the type described above are not without their problems, particularly in terms of construction.

It is therefore a preferred object of the present invention to provide and improved pedestrian airbag arrangement.

According to the present invention, there is provided pedestrian airbag arrangement on a motor vehicle having a windscreen, the arrangement having an airbag defining an inflatable volume for the receipt of inflating gas, said inflatable volume having a primary chamber configured for inflation upon deployment of the airbag so as to extend over or across at least part of the windscreen; and at least one secondary chamber external of the primary chamber, the at least one secondary chamber being configured for inflation upon deployment of the airbag so as to adopt a respective deployed position between the primary chamber and the windscreen to thereby space the primary chamber from the windscreen, the arrangement being **characterised in that** said primary chamber has a dividing structure which at least partially sub-divides the primary chamber into respective inflatable cells located on opposite sides of the dividing structure, said at least one secondary chamber traverses the dividing structure so as to extend outside the primary chamber from one side of the dividing structure to an opposite side of the dividing structure, and wherein said primary chamber and the at least one secondary chamber are formed from flexible material, the material forming the at least one secondary chamber being connected to the material forming the primary chamber only at a first position located to one side of the dividing structure and at a second position located to the other side of the dividing structure, the material of the at least one secondary chamber being unconnected to the material of the primary chamber in the region of said dividing structure between said first and second positions.

Preferably, the material forming the at least one secondary chamber is connected to the material forming the primary chamber by at least one of: stitching; adhesive; the application of heat.

Advantageously, said dividing structure includes an internal baffle provided inside the primary chamber.

Conveniently, the primary chamber is formed from a sheet of said flexible material, the baffle being connected to a surface of the sheet internal of primary chamber, and the at least one secondary chamber being connected at said first and second positions to a surface of the sheet external of the primary chamber.

Preferably, the at least one secondary chamber is configured to be generally elongate in form when inflated and is connected to the material forming the primary chamber in the regions of its respective ends.

Advantageously, the material forming the at least one secondary chamber is at least partly connected to the material forming the primary chamber by a tear-seam.

Conveniently, the at least one secondary chamber is provided in fluid communication with said primary chamber by at least one respective flow port.

Preferably, the or each said flow port is spaced from the dividing structure.

Advantageously, the arrangement further includes an inflator arranged to direct a flow of inflating gas directly into said primary chamber upon actuation, wherein said at least one secondary chamber is arranged for inflation via a flow of said inflating gas from the primary chamber and through the or each said flow port.

Conveniently, the at least one secondary chamber has only a single said flow port providing fluid communication with the primary chamber, the flow port being located on the opposite side of the dividing structure to the inflator

Preferably, the or each said flow port is located in the region of a respective end of the secondary chamber.

Advantageously, the material of the at least one secondary chamber is connected to the material of the primary chamber in the region of the or each flow port.

Conveniently, the material of the at least one secondary chamber is connected to the material of the primary chamber via a connection which circumscribes the or each flow port. Preferably, the arrangement comprises a plurality of said secondary chambers arranged such that their deployed positions are spaced apart from one another in a transverse direction across the vehicle.

Advantageously, said primary chamber and the or each said secondary chamber have a substantially elongate configuration when inflated, and wherein the deployed position of the or each said secondary chamber is generally orthogonal to the inflated position of the primary chamber.

Preferably, the inflatable volume the at least one secondary chamber is smaller than the inflatable volume of said primary chamber.

In arrangements having a plurality of said secondary chambers, it is preferable for the total inflatable volume of said secondary chambers to be smaller than the inflatable volume of said primary chamber.

Conveniently, the at least one secondary chamber has an inflated configuration in which it presents a curved outer surface towards the windscreen of the vehicle.

So that the invention may be more readily understood, and so that further features thereof may be appreciated, embodiments of the invention will now be described by way of example with reference to the accompanying drawings in which:
Figure 1 is a plan view showing an initial stage in the production of a pedestrian airbag embodying the present invention, illustrating two superimposed sheets of flexible material with a baffle sheet arranged therebetween;
Figure 2 is a view corresponding generally to that of figure 1, showing the superimposed sheets connected around their peripheral edges to define a primary inflatable chamber, with the baffle sheet connected to each main sheet along a respective side;
Figure 3 is a plan view similar to that of figure 2, but which shows a subsequent stage in the production of the airbag;
Figure 4 is another plan view showing a still further stage in the production of the airbag, and in particular shows the creation of a plurality of secondary chambers to the airbag;
Figure 5 is a cross-sectional view taken along line V-V in figure 4;
Figure 6 is a cross-sectional view taken along line VI-VI in figure 4;
Figure 7 is a perspective view showing the airbag of figures 4 to 6 in a deployed position across the windscreen of a motor vehicle;
Figure 8 is a cross-sectional view taken along line VIII-VIII in figure 7, showing the cross-sectional configuration of the inflated airbag relative to the windscreen of the vehicle;
Figure 9 is a perspective view showing an airbag in accordance with another embodiment of the present invention;
Figure 10 is a cross-sectional view similar to that of figure 5 showing an alternative profile to part of the airbag;
Figure 11 is cross-sectional view similar to that of figures 5 and 10 showing another alternative profile to part of the airbag;
Figure 12 is a cross-sectional view similar to that of figures 5, 10 and 11 showing a further alternative profile to part of the airbag; and
Figure 13 is a cross-sectional view similar to that of figure 5, but which illustrates an alternative configuration of the primary chamber of the airbag.

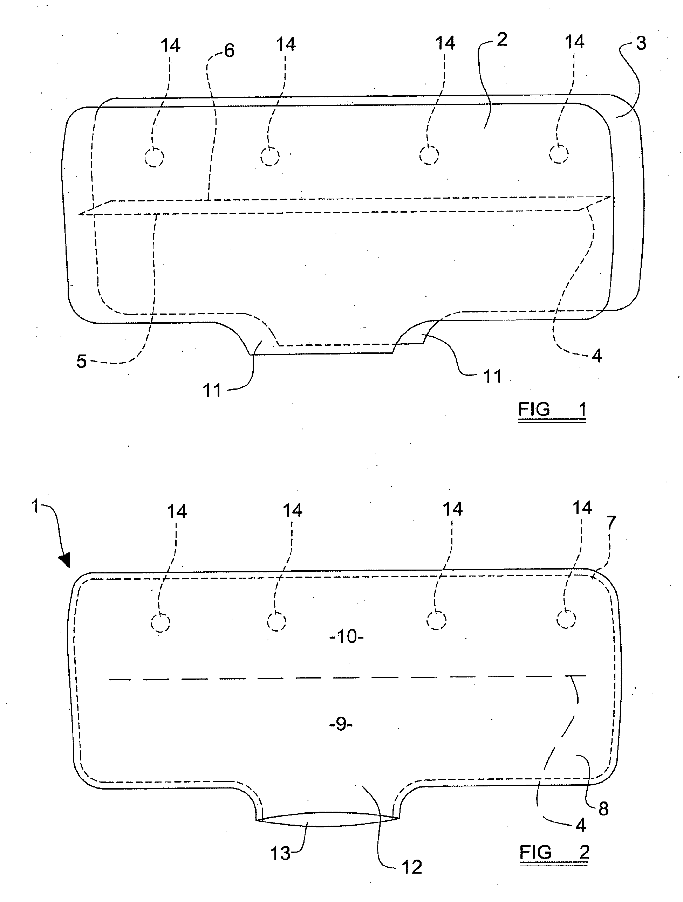

Referring initially to figures 1 to 6, the construction and resulting configuration of a simple form of pedestrian airbag in accordance with the invention will be described. As will be explained hereinafter, more complicated airbag constructions are possible without departing from the scope of the claimed invention.

Figure 1 shows a pair substantially identical primary sheets 2, 3 of flexible material from which the pedestrian airbag 1 is produced. The sheets 2, 3 are preferably formed from woven fabric material and in the embodiment illustrated are both generally rectangular. The sheets 2, 3 are shown in figure 1 in superimposed relation to one another. Also shown in figure 1 (in phantom) is an intermediate sheet 4 of similar flexible material, and which is shown positioned between the two primary sheets 2, 3. The intermediate sheet 4 has an elongate rectangular form and is shown arranged such that its two long side edges 5, 6 lie against opposing surfaces of respective primary sheets 2, 3. As will be noted, in the arrangement illustrated, the intermediate sheet 4 has a length which is somewhat shorter than the overall length of the two primary sheets 2, 3 and is arranged such that its ends are spaced inwardly from the end edges of the two primary sheets 2, 3.

As shown in figure 2, the two primary sheets 2, 3 are interconnected along substantially the entire extent of their peripheral edges by a peripheral seam 7 to define a primary inflatable chamber 8 between the sheets 2, 3 for the receipt of inflating gas. The primary chamber 8 is elongate and generally rectangular as defined generally by the shape of the primary sheets 2, 3. The intermediate sheet 4 is connected, for example via stitching, along its longitudinal side edges 5, 6 to the inner surfaces of the respective primary sheets 2, 3 to define a baffle or tether extending across the inflatable chamber 8 and which interconnects the two primary sheets 2, 3 along its length. The resulting baffle 4 thus forms a dividing structure of the primary inflatable chamber 8 which is effective to sub-divide the chamber into two discrete inflatable cells 9, 10 on respective sides of the baffle 4. The two cells 9, 10 are provided in fluid communication with one another around the ends of the baffle 4. However, in variants of this arrangement, the baffle 4 could be provided with one or more flow ports along its length, or could even include discontinuities along its length to provide for fluid communication between the two cells 9, 10.

As will be noted, each primary sheet 2, 3 is provided with an outwardly projecting tab 11 at a generally central position along one of its long sides. The two tabs 11 are aligned when the sheets are superimposed, and the peripheral seam 7 interconnecting sheets begins at one end of the aligned tabs 11, runs around the periphery of the rectangular sheets, and terminates at the opposite end of the aligned tabs 11. The tabs 11 are thus unconnected along their length and so cooperate to form a neck 12 to the airbag 1, the neck defining a gas inlet aperture 13 to the airbag. The neck 12 is intended to be fitted to an inflator such as a gas generator in a known manner, such that upon actuation of the inflator, a large volume of inflating gas will be directed into the interior volume of the primary inflatable chamber 8, thereby inflating the airbag 1.

It is to be noted, however, that the lower of the two primary fabric sheets 3 illustrated in figures 1 and 2 is provided with a plurality of apertures 14. The apertures 14 are spaced-apart from one another along the length of the sheet 3, and each defines a respective gas flow port, the purpose of which will be described in more detail below.

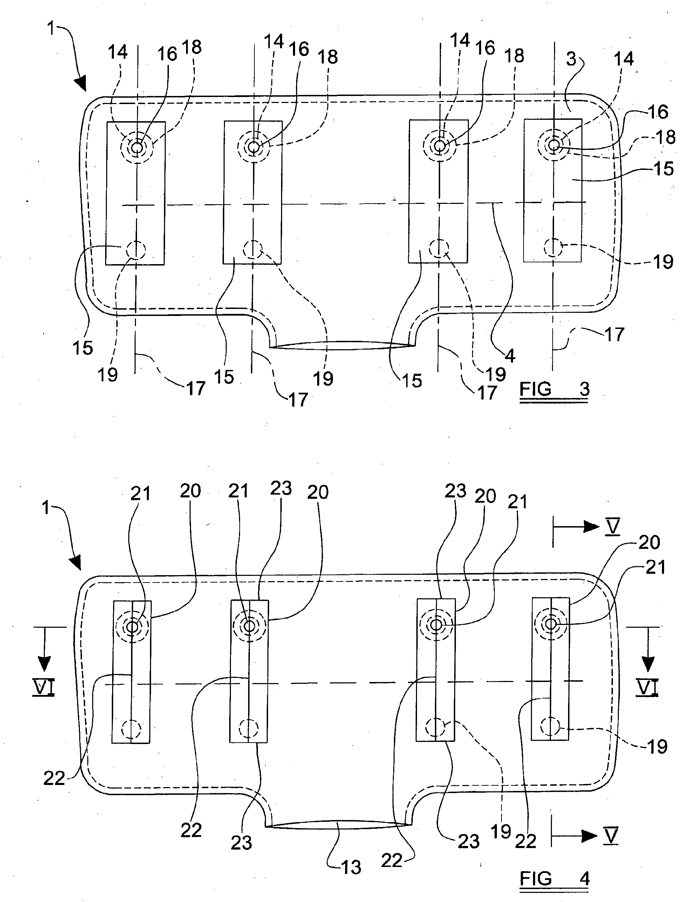

Turning now to consider figure 3, the airbag 1 is shown in an upturned orientation, such that the lower of the two primary fabric sheets 3 shown in figures 1 and 2 is now on the top. Four relatively small rectangular sheets 15 of flexible material, preferably fabric of the similar type as the two primary sheets 2, 3, are overlaid on the upwardly presented lower primary sheet 3. However, in this regard it is to be noted that in preferred embodiments the rectangular sheets are formed from thinner material than the primary chamber. For example, it is envisaged that the primary chamber may be formed from 480 dTex fabric whilst the smaller rectangular sheets 15 may be formed from 235 dTex fabric.

Each of the small rectangular sheets 15 has a respective aperture 16 formed through an end region of the sheet, the apertures 16 in the sheets 15 each being of generally comparable size and shape to the apertures 14 provided through the bottom sheet 3 of the airbag. The sheets 15 are arranged in spaced-apart relation to one another such that their apertures 16 are superimposed over respective apertures 14 provided in the bottom sheet 3 of the airbag, and such that the longitudinal axes 17 of the sheets are generally orthogonal to the longitudinal axis of the primary sheets 2, 3 of the airbag. Importantly, it will be noted that each sheet 15 traverses the baffle 4 so as to extend from one side of the baffle to the other side of the baffle.

In the particular embodiment shown in figure 3, the fabric of each sheet 15 is connected to the fabric of the lower sheet 3 of the airbag 1 by a circular line of stitching located at one end of the sheet 15 and which extends around the aligned apertures 14, 16 to define a first seam 18 which circumscribes the aligned apertures 14, 16, and by another similar circular line of stitching at the opposite end of the sheet 15 which defines a second circular seam 19. Each sheet 15 is thus connected to the lower primary sheet 3 of the airbag 1 at positions located on opposite sides of the baffle 4.

Figure 4 shows each sheet 15 having been manipulated and stitched to define a respective secondary chamber 20 to the airbag 1, each secondary chamber 20 being external to the primary chamber 8 but provided in fluid communication with the primary chamber by respective flow ports 21 defined by respective superimposed pairs of apertures 14, 16. As will be noted, the flow ports 21 are each located on the opposite side of the baffle 4 to the neck 13 of the airbag 1 which is configured for receipt of an inflator.

More particularly, each sheet 15 is manipulated from its generally flat configuration illustrated in figure 3 by moving its opposing edges away from the lower sheet 3 of fabric to which it is connected and towards one another. For example, the opposing long side edges of each sheet are stitched together along substantially their entire length of the sheet 15 to define a central seam 22 to each secondary chamber 20, whilst the shorter end edges are then folded in half and each half of each edge is stitched to the other half of the same edge to define end seams 23 to the secondary chambers.

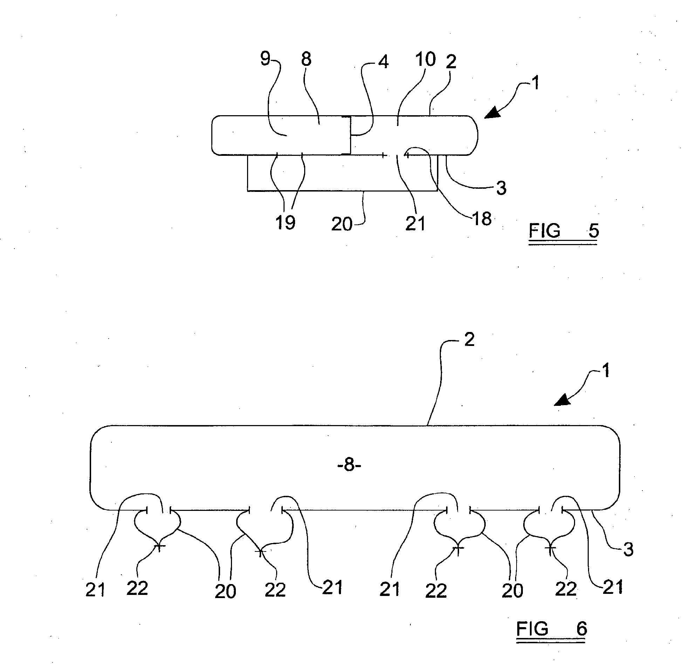

Turning now to consider figures 5 and 6, the resulting airbag is shown in cross-sectional view. As will be noted, each secondary chamber 20 has a generally elongate rectangular configuration, with its longitudinal axis lying substantially orthogonal to the longitudinal axis of the primary chamber 8. As shown most clearly in figure 6, in this particular embodiment, the secondary chambers 20 are arranged in spaced relation to one another across the length of the primary chamber, and are generally parallel to one another.

Figure 5 shows an important characteristic of the airbag arrangement of the present invention. As will be noted, the secondary chambers 20 each traverse the internal baffle 4 provided inside the primary inflatable chamber 8, so as to extend outside the primary chamber 8 from one side of the baffle 4 to an opposite side of the baffle. Furthermore, in the embodiment illustrated, it will be noted that the secondary chambers are each connected, by respective seams 18, 19, to the outside of the primary chamber at positions located at opposite ends of the secondary chamber 20. In between these positions of connection, the material of the secondary chamber is unconnected to the lower sheet 3 of the primary chamber 8, which means that in the region of the baffle 4, the primary and secondary chambers are unconnected. By connecting the secondary chambers 20 to the primary chamber 8 only in the end regions of the secondary chambers, spaced from the baffle 4, there is no risk of the baffle 4 becoming implicated in a seam interconnecting the primary and secondary chambers during manufacture of the airbag 1. Were the baffle 4 to be implicated in such an interconnecting seam during manufacture of the pedestrian airbag, then the resulting airbag would likely not deploy in an appropriate manner because the baffle 4 would be prevented from properly unfolding along its entire length to its deployed condition illustrated in figure 5 in which it extends between the top and bottom panels 2, 3 of the primary chamber 8 to assist in the proper development of the primary chamber 8 in to its design configuration on inflation.

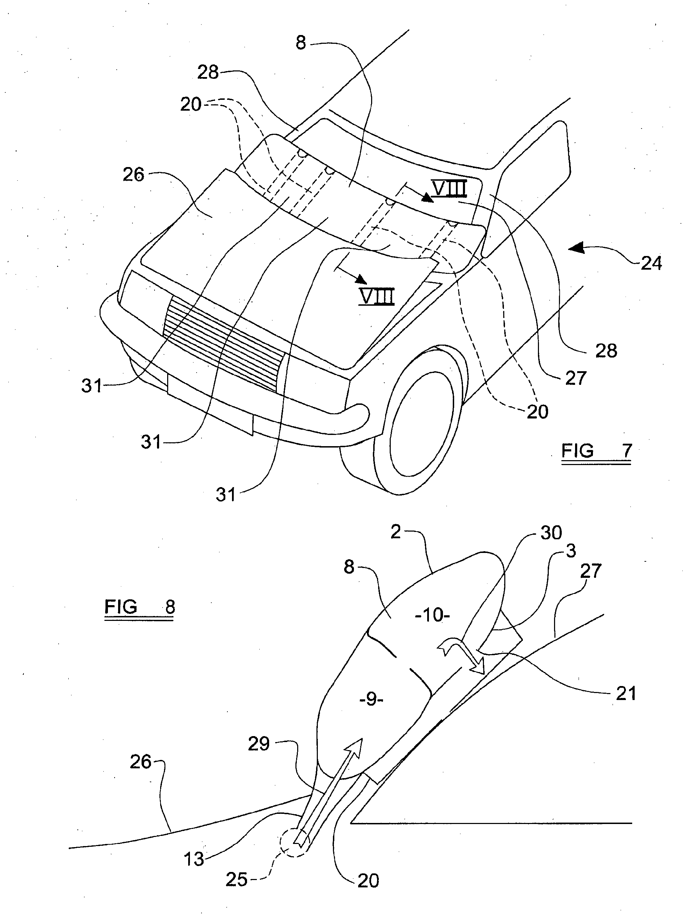

Figures 7 and 8 illustrate a motor vehicle 24 fitted with a pedestrian airbag 1 in accordance with the embodiment described above, and show the airbag 1 in an inflated condition following actuation of an inflator 25 provided in the neck region 13 if the airbag beneath the rear part of the hood or bonnet 26 of the vehicle 24. The rear of the hood or bonnet 26 is lifted, for example by another air-bag, a piston or other lifting arrangement, to allow sufficient space for the pedestrian airbag 1 to inflate so that it deploys in a manner effective to cover at least part of the windscreen 27 and the adjacent A-pillars 28 of the vehicle, thereby cushioning the impact of a pedestrian with these parts of the vehicle.

More particularly, having regard to figure 8, it should be noted that upon initial actuation of the inflator 25, a large volume of inflating gas is directed at high speed through the neck 13 and into the primary chamber 8 defined between the main front and rear fabric sheets 2, 3 of the airbag, as illustrated schematically by arrow 29. This flow of gas serves to rapidly inflate the primary chamber 8 of the airbag 1, thereby ensuring that the airbag 1 deploys quickly from its initial packed configuration so as to extend generally across the windscreen 27 of the vehicle 26, as illustrated in figure 7. More particularly, the presence of the baffle 4 within the primary chamber 8 and extending transversely across the width of the motor vehicle, serves to deflect a major proportion of the initial gas flow 25 outwardly towards the sides of the primary chamber 1 rather than straight towards the opposite edge of the airbag. The baffle 4 thus ensures that the first cell 9 of the primary chamber 8, located closest to the inflator 25 and the bottom of the windscreen 27 reaches a state of substantially full inflation before the second cell 10 which then begins to inflate via the flow of gas around the ends of the baffle 4 and/or through any apertures or discontinuities provided along the length of the baffle. The baffle 4 thus helps to ensure that the airbag 1 quickly inflates to a configuration which extends substantially fully across the width of the windscreen 27 towards the A-pillars 28.

As the second cell 10 of the primary chamber 8 reaches substantially complete inflation, secondary flows of the inflating gas occur through the flow ports 21 and thus into the secondary chambers 20 as illustrated schematically by arrow 30, thereby inflating the secondary chambers 20 such that they adopt their elongate inflated configurations as illustrated in figures 4 to 6.

As shown particularly in figure 7, in their inflated and deployed positions, the secondary chambers 20 are spaced apart from one another in a transverse direction across the vehicle. More particularly, it will be noted that the deployed positions of the secondary chambers 20 are generally parallel to one another and orthogonal to the length of the primary chamber 8.

Furthermore, as shown in figure 8, the secondary chambers 20 inflate so as to adopt deployed positions between the primary chamber 8 of the airbag 1 and the windscreen 27 of the vehicle, and thus serve to space the rear sheet 3 of the primary chamber 8 from the windscreen, creating cavities 31 between the primary chamber 8 and the windscreen, each cavity 31 being formed between adjacent secondary chambers 20. Each secondary chamber 20 can be considered to represent a "fender" in its inflated configuration, effective to space the primary chamber 8 from the windscreen, thereby improving the cushioning properties of the primary chamber.

It has been found that the above-mentioned inflation characteristic in which the primary chamber 8 of the airbag is spaced from the windscreen 27 of the vehicle by the cavities 31 between adjacent secondary chambers 20, significantly improves the protection afforded to the head of a pedestrian striking the airbag 1. It is thought that this improvement in the level of protection results from the increase in distance through which energy can be absorbed by the airbag 1 for a given total inflatable volume of the entire airbag. The provision of the secondary chambers 20, which inflate upon deployment of the airbag to form "fenders" spacing the larger primary chamber 8 of the airbag from the windscreen 27, allows the total inflatable volume of the entire airbag 1 to be reduced compared to prior art arrangements without any reduction in the level of impact protection provided to the head or torso of a pedestrian impacting the bag.

Furthermore, if the secondary chambers 20 are configured to have sufficient depth as measured orthogonally to the surface of the windscreen 27, then it has been found that they can also provide the added benefit of providing the driver of the vehicle with an improved forward view of the road in the event that the airbag 1 is actuated, by spacing the primary chamber 8 sufficiently from the surface of the windscreen 27 to permit the driver to see beneath the primary chamber 8. Depending on the particular type of vehicle concerned, this effect can be further improved by spacing the secondary chambers 20 further apart from one another on the driver's side of the vehicle, whilst also ensuring that the secondary chambers (at least) on the driver's side lie generally parallel to the driver's line of sight rather than across it.

As mentioned above, the secondary chambers 20 are each formed from fabric which is significantly thinner, and hence lighter, than the fabric from which the primary chamber 8 is formed. This is possible because the secondary chambers 20 are inflated by a secondary flow of gas 30 from the primary chamber 8 rather than by the much more aggressive primary flow of gas 29 from the gas generator 25. This means that the fabric of the secondary chambers 20 does not have to be as strong in order to resist the high forces of the primary gas flow 29, thereby permitting them to be made from lighter weight fabric which in turn makes the entire airbag easier to package tightly prior to deployment.

Whilst the invention has been described above with reference to a specific embodiment, it is to be appreciated that various modifications or alterations could be made to the airbag arrangement without departing from the scope of the claimed invention. For example, whilst the embodiment described above and illustrated in figures 1 to 8 is configured such that the end regions of the secondary chambers 20 remote from their respective flow ports 21 are stitched to the fabric of the primary chamber 8 by circular seams 19, other configurations of seams could also be used. For example, the end regions of the secondary chambers 20 could be connected to the primary chamber 8 by a series of linear or zig-zag stitched seams. Alternatively, the secondary chambers 20 could be connected to the fabric of the primary chamber at both ends by the use of adhesive, or they could be fused to the fabric of the primary chamber 8 by a heat treatment technique.

In another proposed embodiment, the end regions of the secondary chambers 20, and in particular the ends remote from the flow ports 21, can be connected to the primary chamber 8 by having their end edges implicated and hence incorporated into the peripheral seam 7 which interconnects the two primary sheets 2, 3 of the primary chamber 8.

It is also envisaged that in variants of the invention, either or both end regions of the secondary chambers 20 could be connected to the lower sheet 3 of the primary chamber 8 by tear seams which are configured to rupture and thus permit at least partial disconnection of the secondary chamber 20 from the primary chamber 8 in the event that the secondary chamber 20 snags or becomes fouled by part of the motor vehicle, such as the windscreen wipers for example. This might be considered preferable in certain instances to the entire airbag 1 becoming deformed into an undesirable configuration in the event that the vehicle's windscreen wipers are operational at the time of deployment.

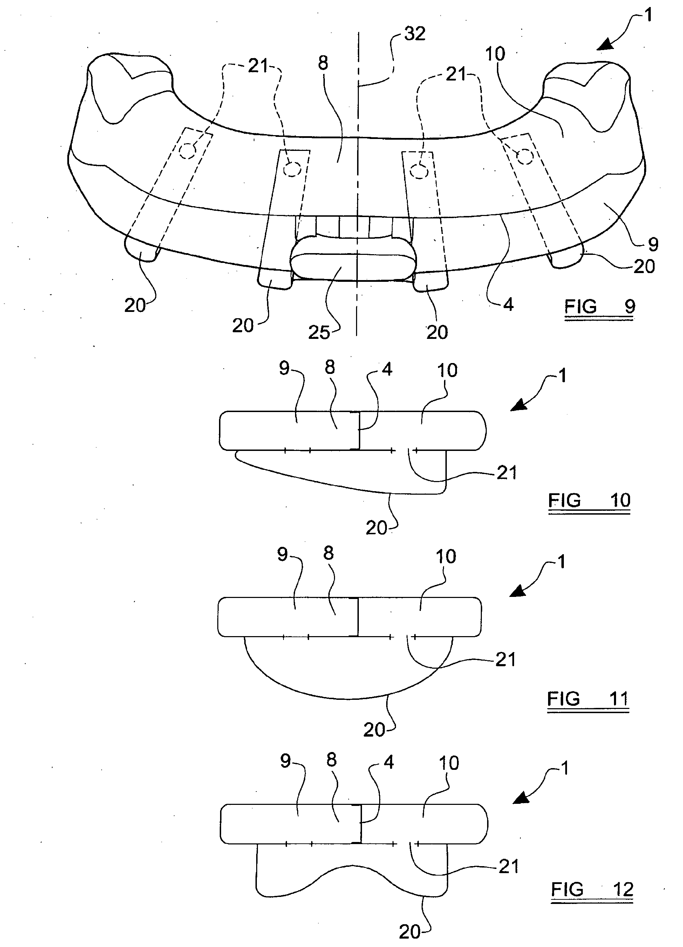

Figure 9 illustrates schematically an airbag embodiment in accordance with the present invention, which in many respects is similar to the simple arrangement described above and illustrated in figures 1 to 8. A principle difference between the arrangement of figure 9 and the arrangement of figures 1 to 8 is that the arrangement shown in figure 9 has a more intricately shaped primary chamber 8. In particular, it will be noted that the primary chamber 8 has a generally arcuate configuration as viewed from above in figure 9. Furthermore, it will be noted that there are a total of six secondary chambers 20 provided in this modified embodiment, with the secondary chambers 20 no longer being parallel to one another in their elongate and inflated configuration as illustrated. More particularly, the secondary chambers 20 are arranged relative to one another in their inflated positions such that they converge towards the transverse axis 32 of the airbag 1 (which will be generally coincident with the longitudinal axis of the vehicle upon deployment) in a rearward direction away from the inflator 25 (which in this arrangement is proposed to be provided inside the primary chamber 8). Nevertheless, because of the arcuate configuration of the primary chamber 8, each secondary chamber 20 is still generally orthogonal to the respective part of the elongate primary chamber 9 to which it is attached or formed.

Having regard now to figures 10 to 12, it is to be appreciated that various different shapes are possible for the secondary chambers 20 when they are in their fully inflated deployed configurations. For example, figure 10 shows an arrangement in which the secondary chambers 20 each have a tapering profile such that they have a greater depth at their ends in which the flow ports 21 are provided than at their opposite ends which are located on the other side of the baffle 4. Figure 11 shows an arrangement having secondary chambers 20 configured to present a generally convex surface towards the windscreen 27, whilst figure 12 shows an arrangement in which the secondary chambers 20 are configured to present a generally concave surface towards the windscreen. Many other configurations of secondary chambers 20 are also possible without departing from the scope of the claimed invention. For example, it is also possible for the secondary chambers to have a configuration in which their width (as measured generally transversely across the vehicle) is tapered.

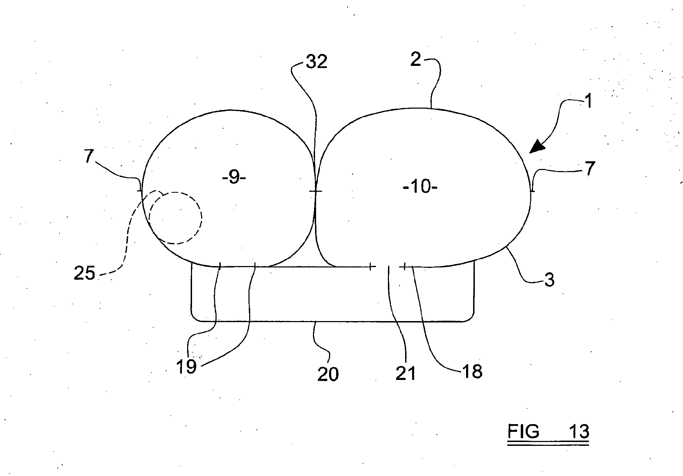

Figure 13 illustrates in cross-section an alternative configuration of airbag in accordance with the present invention. In this arrangement the dividing structure of the primary chamber 8 which sub-divides the primary chamber into discrete inflatable cells 9, 10 is not provided by a baffle 4 in the sense of the previously described embodiments, but is instead provided by a constriction created by interconnecting the front and rear sheets 2, 3 of the primary chamber, as shown at 32 in figure 13. The constriction 32 is preferably provided as a line running generally parallel to the major axis of the primary chamber 8, and may have gaps or discontinuities along its length in a similar manner to the previously described baffles 4, in order to permit the flow of inflating gas from the front cell 8 to the rear cell 9. The constriction 32 may be provided as a stitched seam between the sheets 2, 3, or alternatively may be provided by adhesively bonding the sheets 2, 3 together, or even by heat-sealing the sheets 2, 3 together.

As will be noted from figure 13, the secondary chambers 20 of the airbag still traverse the dividing structure defined by the constriction 32, and thus extend outside the primary chamber 32 from one side to the other side, and are connected to the primary chamber only at positions 18, 19 spaced from the dividing structure. The central region of the primary chambers 20, between their points of connection 18, 19 to the primary chamber, thus remain unconnected to the primary chamber 8, thereby avoiding the chance of the dividing structure being implicated in the connection between the secondary chamber and the primary chamber.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A pedestrian airbag arrangement on a motor vehicle (24) having a windscreen (27), the arrangement having an airbag (1) defining an inflatable volume for the receipt of inflating gas, said inflatable volume (1) having a primary chamber(8) configured for inflation upon deployment of the airbag so as to extend over or across at least part of the windscreen (27); and at least one secondary chamber (20) external of the primary chamber, the at least one secondary chamber (20) being configured for inflation upon deployment of the airbag (1) so as to adopt a respective deployed position between the primary chamber (8) and the windscreen (27) to thereby space the primary chamber (8) from the windscreen (27), the arrangement being **characterised in that** said primary chamber (8) has a dividing structure (4) which at least partially sub-divides the primary chamber into respective inflatable cells (9,10) located on opposite sides of the dividing structure (4), said at least one secondary chamber (20) traverses the dividing structure (4) so as to extend outside the primary chamber (8) from one side (9) of the dividing structure (4) to an opposite side (10) of the dividing structure, and wherein said primary chamber(8) and the at least one secondary chamber (20) are formed from flexible material, the material forming the at least one secondary chamber (20) being connected to the material forming the primary chamber (8) only at a first position (18) located to one side of the dividing structure (4) and at a second position (19) located to the other side of the dividing structure (4), the material of the at least one secondary chamber (20) being unconnected to the material of the primary chamber (8) in the region of said dividing structure (4) between said first and second positions (18,19).

2. A pedestrian airbag arrangement according to claim 1, wherein the material forming the at least one secondary chamber (20) is connected to the material forming the primary chamber (28) by at least one of: stitching (18, 19); adhesive; the application of heat.

3. A pedestrian airbag arrangement according to claim 1 or claim 2, wherein said dividing structure (4) includes an internal baffle provided inside the primary chamber (8).

4. A pedestrian airbag arrangement according to claim 3, wherein the primary chamber (8) is formed from a sheet (3) of said flexible material, the baffle (4) being connected to a surface of the panel (3) internal of primary chamber (8), and the at least one secondary chamber (20) being connected at said first and second positions (18, 19) to a surface of the panel (3) external of the primary chamber (8).

5. A pedestrian airbag arrangement according to any preceding claim, wherein the at least one secondary chamber (20) is configured to be generally elongate in form when inflated and is connected to the material forming the primary chamber (8) in the regions of its respective ends.

6. A pedestrian airbag arrangement according to any preceding claim, wherein the material forming the at least one secondary chamber (20) is at least partly connected to the material forming the primary chamber (8) by a tear-seam.

7. A pedestrian airbag arrangement according to any preceding claim, wherein the at least one secondary chamber (20) is provided in fluid communication with said primary chamber (8) by at least one respective flow port (21).

8. A pedestrian airbag arrangement according to claim 7, wherein the or each said flow port (21) is spaced from the dividing structure (4).

9. A pedestrian airbag arrangement according to claim 7 or claim 8, further includes an inflator (25) arranged to direct a flow (29) of inflating gas directly into said primary chamber (8) upon actuation, wherein said at least one secondary chamber (20) is arranged for inflation via a flow (30) of said inflating gas from the primary chamber (8) and through the or each said flow port (21).

10. A pedestrian airbag arrangement according to claim 9, wherein the at least one secondary chamber(20) has only a single said flow port (21) providing fluid communication with the primary chamber (8), the flow port (21) being located on the opposite side (10) of the dividing structure (4) to the inflator (25).

11. A pedestrian airbag arrangement according to any one of claims 7 to 10, as dependent upon claim 5, wherein the or each said flow port (21) is located in the region of a respective end of the secondary chamber (20).

12. A pedestrian airbag arrangement according to any one of claims 7 to 11, wherein the material of the at least one secondary chamber (20) is connected to the material of the primary chamber (8) in the region of the or each flow port (21).

13. A pedestrian airbag arrangement according to claim 12, wherein the material of the at least one secondary chamber (20) is connected to the material of the primary chamber (8) via a connection (18) which circumscribes the or each flow port (21).

14. A pedestrian airbag arrangement according to any preceding claim comprising a plurality of said secondary chambers (20) arranged such that their deployed positions are spaced apart from one another in a transverse direction across the vehicle (24).

15. A pedestrian airbag arrangement according to any preceding claim, wherein said primary chamber (8) and the or each said secondary chamber (20) have a substantially elongate configuration when inflated, and wherein the deployed position of the or each said secondary chamber (20) is generally orthogonal to the inflated position of the primary chamber (8).

## Patentansprüche

1. Fußgängerairbaganordnung an einem Kraftfahrzeug (24), welches eine Windschutzscheibe (27) aufweist, wobei die Anordnung einen Airbag (1) aufweist, welcher ein aufblasbares Volumen zum Empfang von Füllgas definiert, wobei das aufblasbare Volumen (1) eine Primärkammer (8), die bei einer Entfaltung des Airbags zur Befüllung ausgebildet ist, um sich so über wenigstens einen oder quer zu wenigstens einem Teil der Windschutzscheibe (27) zu erstrecken; und wenigstens eine Sekundärkammer (20) außerhalb der Primärkammer aufweist, wobei die wenigstens eine Sekundärkammer (20) bei einer Entfaltung des Airbags (1) zur Befüllung ausgebildet ist, um eine jeweils entfaltete Position zwischen der Primärkammer (8) und der Windschutzscheibe (27) anzunehmen, um dadurch die Primärkammer (8) von der Windschutzscheibe (27) zu beabstanden, wobei die Anordnung **dadurch gekennzeichnet ist, dass** die Primärkammer (8) ein Trennelement (4) aufweist, welches die Primärkammer wenigstens teilweise in jeweils aufblasbare Zellen (9,10) unterteilt, die auf gegenüberliegenden Seiten des Trennelements (4) angeordnet sind, wobei die wenigstens eine Sekundärkammer (20) das Trennelement (4) durchquert, um sich außerhalb der Primärkammer (8) von einer Seite (9) des Trennelements (4) zu einer gegenüberliegenden Seite (10) des Trennelements zu erstrecken, und wobei die Primärkammer (8) und die wenigstens eine Sekundärkammer (20) aus flexiblem Material gebildet sind, wobei das Material, welches die wenigstens eine Sekundärkammer (20) bildet, nur an einer ersten Position (18), welche auf einer Seite des Trennelements (4) angeordnet ist und an einer zweiten Position (19), welche auf der anderen Seite des Trennelements angeordnet ist, mit dem Material verbunden ist, welches die Primärkammer (8) bildet, wobei das Material der wenigstens einen Sekundärkammer (20) in dem Bereich des Trennelements (4) zwischen den ersten und zweiten Positionen (18,19) außer Verbindung steht mit dem Material der Primärkammer (8).

2. Fußgängerairbaganordnung nach Anspruch 1, wobei das Material, welches die wenigstens eine Sekundärkammer (20) bildet, mit dem Material, welches die Primärkammer (28) bildet, wenigstens über: Nähen (18,19); Klebstoff; die Aufbringung von Hitze verbunden ist.

3. Fußgängerairbaganordnung nach Anspruch 1 oder 2, wobei das Trennelement (4) eine innere Trennwand beinhaltet, welche im Inneren der Primärkammer (8) angeordnet ist.

4. Fußgängerairbaganordnung nach Anspruch 3, wobei die Primärkammer (8) aus einem Blatt (3) aus flexiblem Material gebildet ist, wobei die Trennwand (4) mit einer Oberfläche des Paneels (3) im Inneren der Primärkammer (8) verbunden ist, und die wenigstens eine Sekundärkammer (20) außerhalb der Primärkammer (8) an den ersten und zweiten Positionen (18,19) mit einer Oberfläche des Paneels (3) verbunden ist.

5. Fußgängerairbaganordnung nach einem der vorhergehenden Ansprüche, wobei die wenigstens eine Sekundärkammer (20) befüllt eine im Wesentlichen lang gestreckte Form aufweist und mit dem Material verbunden ist, welches in dem Bereich seiner jeweiligen Enden die Primärkammer (8) bildet.

6. Fußgängerairbaganordnung nach einem der vorhergehenden Ansprüche, wobei das Material, welches die wenigstens eine Sekundärkammer (20) bildet, zumindest teilweise mit einer Sollreißnaht mit dem Material verbunden ist, welches die Primärkammer (8) bildet.

7. Fußgängerairbaganordnung nach einem der vorhergehenden Ansprüche, wobei die wenigstens eine Sekundärkammer (20) über wenigstens eine jeweilige Durchflussöffnung (21) mit der Primärkammer (8) in Fluidverbindung steht.

8. Fußgängerairbaganordnung nach Anspruch 7, wobei die eine oder jede Durchflussöffnung (21) von dem Trennelement (4) beabstandet ist.

9. Fußgängerairbaganordnung nach Anspruch 7 oder 8, weiter enthaltend einen Gasgenerator (25), der dazu angeordnet ist, um bei Auslösung einen Füllgasstrom (29) direkt in die Primärkammer (8) zu leiten, wobei die wenigstens eine Sekundärkammer (20) zur Befüllung über den Füllgasstrom (30) von der Primärkammer (8) und durch die eine oder jede Durchflussöffnung (21) angeordnet ist.

10. Fußgängerairbaganordnung nach Anspruch 9, wobei die wenigstens eine Sekundärkammer (20) nur eine einzelne Durchflussöffnung (21) aufweist, welche eine Fluidverbindung mit der Primärkammer (8) bereitstellt, wobei die Durchflussöffnung (21) auf der gegenüberliegenden Seite (10) des Trennelements (4) in Richtung auf den Gasgenerator (25) hin angeordnet ist.

11. Fußgängerairbaganordnung nach einem der Ansprüche 7 bis 10, soweit abhängig von Anspruch 5, wobei die eine oder jede Durchflussöffnung (21) in dem Bereich eines jeweiligen Endes der Sekundärkammer (20) angeordnet ist.

12. Fußgängerairbaganordnung nach einem der Ansprüche 7 bis 11, wobei das Material der wenigstens einen Sekundärkammer (20) mit dem Material der Primärkammer (8) in dem Bereich der einen oder jeder Durchflussöffnung (21) verbunden ist.

13. Fußgängerairbaganordnung nach Anspruch 12, wobei das Material der wenigstens einen Sekundärkammer (20) mit dem Material der Primärkammer (8) über eine Verbindung (18) verbunden ist, welche die eine oder jede Durchflussöffnung (21) umschließt.

14. Fußgängerairbaganordnung nach einem der vorhergehenden Ansprüche, umfassend eine Vielzahl von Sekundärkammern (20), welche so angeordnet sind, dass ihre Entfaltungspositionen über das Fahrzeug (24) in einer Querrichtung voneinander beabstandet sind.

15. Fußgängerairbaganordnung nach einem der vorhergehenden Ansprüche, wobei die Primärkammer (8) und die eine oder jede Sekundärkammer (20) befüllt im Wesentlichen eine lang gestreckte Konfiguration aufweisen, und wobei die Entfaltungsposition der einen oder jeder Sekundärkammer (20) im wesentlichen orthogonal zu der befüllten Position der Primärkammer (8) positioniert ist.

## Revendications

1. Agencement d'airbag pour piétons installé sur un véhicule automobile (24) possédant un pare-brise (27), l'agencement présentant un airbag (1) définissant un volume gonflable destiné à recevoir un gaz de gonflage, ledit volume gonflable (1) présentant une chambre primaire (8), configurée pour se gonfler lors du déploiement de l'airbag de façon à s'étendre sur ou en travers d'au moins une partie du pare-brise (27), et au moins une chambre secondaire (20) extérieure à la chambre primaire, l'au moins une chambre secondaire (20) étant configurée pour se gonfler lors du déploiement de l'airbag (1) de manière à adopter une position déployée respective entre la chambre primaire (8) et le pare-brise (27) pour ainsi écarter la chambre primaire (8) du pare-brise (27), l'agencement étant **caractérisé en ce que** ladite chambre primaire (8) présente une structure séparatrice (4) qui subdivise au moins partiellement la chambre primaire en des cellules gonflables (9, 10) respectives situées sur des côtés opposés de la structure séparatrice (4), ladite au moins une chambre secondaire (20) traverse la structure séparatrice (4) de manière à s'étendre en dehors de la chambre primaire (8), depuis un côté (9) de la structure séparatrice (4) jusqu'à un côté opposé (10) de la structure séparatrice, ladite chambre primaire (8) et l'au moins une chambre secondaire (20) étant constituées dans un matériau souple, le matériau constituant l'au moins une chambre secondaire (20) étant raccordé au matériau constituant la chambre primaire (8) uniquement en une première position (18) située sur un côté de la structure séparatrice (4) et en une seconde position (19) située sur l'autre côté de la structure séparatrice (4), le matériau de l'au moins une chambre secondaire (20) n'étant pas raccordé au matériau de la chambre primaire (8) dans la partie de ladite structure séparatrice (4) située entre lesdites première et seconde positions (18, 19).

2. Agencement d'airbag pour piétons selon la revendication 1, dans lequel le matériau constituant l'au moins une chambre secondaire (20) est raccordé au matériau constituant la chambre primaire (28) par couture (18, 19), adhésif et/ou application de chaleur.

3. Agencement d'airbag pour piétons selon la revendication 1 ou la revendication 2, dans lequel ladite structure séparatrice (4) comporte un déflecteur interne prévu à l'intérieur de la chambre primaire (8).

4. Agencement d'airbag pour piétons selon la revendication 3, dans lequel la chambre primaire (8) est constituée d'une feuille (3) dudit matériau souple, le déflecteur (4) étant raccordé à une surface de la feuille (3) qui est intérieure à la chambre primaire (8), et l'au moins une chambre secondaire (20) étant raccordée au niveau desdites première et seconde positions (18, 19) à une surface de la feuille (3) qui est extérieure à la chambre primaire (8).

5. Agencement d'airbag pour piétons selon l'une quelconque des revendications précédentes, dans lequel l'au moins une chambre secondaire (20) est configurée pour être de forme globalement allongée une fois gonflée et est raccordée au matériau constituant la chambre primaire (8) au niveau de ses extrémités respectives.

6. Agencement d'airbag pour piétons selon l'une quelconque des revendications précédentes, dans lequel le matériau constituant l'au moins une chambre secondaire (20) est au moins partiellement raccordé au matériau constituant la chambre primaire (8) par une ligne de déchirure.

7. Agencement d'airbag pour piétons selon l'une quelconque des revendications précédentes, dans lequel l'au moins une chambre secondaire (20) est conçue en communication fluidique avec ladite chambre primaire (8) par le biais d'au moins un orifice d'écoulement (21) respectif.

8. Agencement d'airbag pour piétons selon la revendication 7, dans lequel ledit ou lesdits orifices d'écoulement (21) sont espacés de la structure séparatrice (4).

9. Agencement d'airbag pour piétons selon la revendication 7 ou la revendication 8, comportant en outre un gonfleur (25) agencé pour diriger un écoulement (29) de gaz de gonflage directement dans ladite chambre primaire (8) lors de son activation, ladite au moins une chambre secondaire (20) étant conçue pour se gonfler par le biais d'un écoulement (30) dudit gaz de gonflage issu de la chambre primaire (8) et traversant ledit ou lesdits orifices d'écoulement (21).

10. Agencement d'airbag pour piétons selon la revendication 9, dans lequel l'au moins une chambre secondaire (20) ne présente qu'un seul orifice d'écoulement (21) pour assurer la communication fluidique avec la chambre primaire (8), l'orifice d'écoulement (21) étant situé sur le côté (10) de la structure séparatrice (4) qui est opposé au gonfleur (25).

11. Agencement d'airbag pour piétons selon l'une quelconque des revendications 7 à 10, dans la mesure où elles dépendent de la revendication 5, dans lequel ledit ou lesdits orifices d'écoulement (21) sont situés au niveau d'une extrémité respective de la chambre secondaire (20).

12. Agencement d'airbag pour piétons selon l'une quelconque des revendications 7 à 11, dans lequel le matériau de l'au moins une chambre secondaire (20) est raccordé au matériau de la chambre primaire (8) au niveau du ou des orifices d'écoulement (21).

13. Agencement d'airbag pour piétons selon la revendication 12, dans lequel le matériau de l'au moins une chambre secondaire (20) est raccordé au matériau de la chambre primaire (8) par le biais d'un raccord (18) qui entoure le ou les orifices d'écoulement (21).

14. Agencement d'airbag pour piétons selon l'une quelconque des revendications précédentes, comprenant une pluralité desdites chambres secondaires (20) qui sont agencées de manière que, une fois déployées, elles soient espacées les unes des autres dans le sens transversal du véhicule (24).

15. Agencement d'airbag pour piétons selon l'une quelconque des revendications précédentes, dans lequel ladite chambre primaire (8) et ladite ou lesdites chambres secondaires (20) présentent une configuration sensiblement allongée une fois gonflées, la position déployée de ladite ou desdites chambres secondaires (20) étant globalement orthogonale à la position gonflée de la chambre primaire (8).
